# EUROPÄISCHE PATENTSCHRIFT

(11) **EP 2 409 345 B1**
(45) Veröffentlichungstag und Bekanntmachung des Hinweises auf die Patenterteilung: **19.06.2013**
(21) Anmeldenummer: 10709970.7
(22) Anmeldetag: 15.03.2010
(51) Int. Cl.: H01M 2/10, H01M 2/20, H01M 2/24, H01R 9/00, H01M 2/02, H01M 2/30

(54) **ELEKTROENERGIE-SPEICHERVORRICHTUNG MIT FLACHZELLEN, ABSTANDSELEMENTEN UND KONTAKTIERUNGSEINRICHTUNGEN**
ELECTRIC ENERGY MEMORY APPARATUS WITH FLAT-TYPE CELLS, SPACING ELEMENTS AND CONTACT DEVICES
DISPOSITIF ACCUMULATEUR D'ÉNERGIE ÉLECTRIQUE À ÉLÉMENTS PLATS, À ÉLÉMENTS D'ÉCARTEMENT ET À DISPOSITIFS DE CONNEXION PAR CONTACT

(30) Priorität: 16.03.2009 DE 102009013346
(43) Veröffentlichungstag der Anmeldung: 25.01.2012
(73) Patentinhaber: Li-Tec Battery GmbH, 01917 Kamenz (DE)
(72) Erfinder: HOHENTHANNER, Claus-Rupert, 63457 Hanau (DE); MEINTSCHEL, Jens, 02994 Bernsdorf (DE); SCHMIDT, Torsten, 06188 Landsberg (DE); BRASSE, Claudia, 40667 Meerbusch (DE)
(74) Vertreter: Wallinger, Michael
(86) Internationale Anmeldenummer: PCT/EP2010/001620
(87) Internationale Veröffentlichungsnummer: WO 2010/105789

(56) Entgegenhaltungen:
- EP-A2- 1 798 787
- WO-A1-2008/156167
- WO-A2-2010/081704
- JP-A- 2007 035 311
- US-A1- 2004 021 442

## Beschreibung

Die vorliegende Erfindung betrifft eine Elektroenergie-Speichervorrichtung mit Flachzellen und Abstandselementen.

Es ist bekannt, eine Elektroenergie-Speichervorrichtung aus einer Mehrzahl von Elektroenergie-Speicherzellen aufzubauen, die mittels einer Spanneinrichtung zu einem Block zusammengefasst sind. Solche Elektroenergie-Speicherzellen sind z.B. sogenannte Pouch- oder Coffeebag-Zellen, als flach und rechteckig gebaute Speicherzellen für Elektroenergie (Batteriezellen, Akkumulatorzellen, Kondensatoren, ...), deren elektrochemisch aktiver Teil von einer folienartigen Verpackung umgeben ist, durch welche elektrische Anschlüsse in Blechform, die sogenannten (Strom-)Ableiter geführt sind. Die elektrische Reihen- oder Parallelschaltung der Zellen erfolgt durch leitfähige Kontaktelemente, welche die elektrische Verbindung zwischen den entsprechenden Stromableitern benachbarter Zellen herstellen. Dabei ist es verbreitet, die Zellen in einem Stapel, lose in einem Gestell aufgenommen oder über eine Klammer oder dergleichen zusammengepresst, anzuordnen und die oben freiliegenden Pole bzw. Stromableiter mit geeigneten Mitteln zu verbinden.

Bekannte Elektroenergie-Speichervorrichtungen mit Spanneinrichtungen und Kontaktelementen sind in WO 2010/081704 A2 und JP 2007-35311 A offenbart.

Es ist eine Aufgabe der vorliegenden Erfindung, eine Elektroenergie-Speichervorrichtung bereitzustellen, in der eine Anzahl von flachen Speicherzellen platzsparend und montagefreundlich in einem stabilen Block angeordnet, sicher fixiert und zuverlässig verschaltet sind. Insbesondere ist es eine Aufgabe der Erfindung, mechanische Belastungen auf die elektrochemisch aktiven Teile der Speicherzellen zu vermeiden. Des Weiteren ist es Aufgabe der Erfindung, mechanische Belastungen der sonstigen Bauteile gut zu verteilen, deren Verformung gleichmäßig zu halten und deren Beschädigung zu vermeiden.

Die Aufgabe wird durch die Merkmale des unabhängigen Anspruchs 1 gelöst. Vorteilhafte Weiterbildungen der Erfindung bilden den Gegenstand der Unteransprüche.

Nach der vorliegenden Erfindung weist eine Elektroenergie-Speichervorrichtung eine Mehrzahl von flachen Speicherzellen zur Speicherung und Abgabe elektrischer Energie mit gegenüberliegenden, flachen Stromableitern, eine Mehrzahl von Abstandselementen zum Einhalten eines vorbestimmten Abstands zwischen den Speicherzellen, und ein Spannmittel zum Verspannen der Zellen zu einem Stapel auf, wobei die Abstandselemente Druckflächen aufweisen, wobei die Stromableiter der Zellen jeweils zwischen den Druckflächen zweier Abstandselemente mittels Kraftschluss durch das Spannmittel eingespannt sind, wobei im Bereich gegenüberliegender Druckflächen eines Abstandselements entweder eine Kontaktierungseinrichtung zum Herstellen einer elektrischen Verbindung zwischen den gegenüberliegenden Druckflächen oder eine isolierende Struktur vorgesehen ist, wobei die Abstandselemente so ausgelegt sind, dass die Stauchungen zwischen den Druckflächen mit isolierender Struktur und zwischen den Druckflächen mit Kontaktierungseinrichtung aneinander angeglichen sind.

Da die Stromableiter der Zellen jeweils zwischen den Druckflächen zweier Abstandselemente mittels Kraftschluss durch das Spannmittel eingespannt sind, wird ein vorbestimmter Abstand zwischen benachbarten Zellen eingehalten, der so eingestellt sein kann, dass auf einen elektrochemisch aktiven Teil der Zellen keine Klemmkraft ausgeübt wird. Dies hat Vorteile hinsichtlich der Funktionssicherheit, Haltbarkeit und Temperaturhaushalt der Zellen. Da ferner im Bereich der Druckflächen eine Kontaktierungseinrichtung zur elektrischen Verbindung zwischen den gegenüberliegenden Druckflächen vorgesehen sein kann, können die Stromableitern benachbarter Zellen ohne zusätzliche Verbinder elektrisch verbunden werden. Die Kontaktierungseinrichtungen können mit den Abstandselementen vormontiert werden oder ein Abstandselement selbst bilden; dies erleichtert die Montage. Da ferner die Kontaktierungseinrichtungen als Teil der Abstandselemente über das Spannmittel mit verspannt und daher ortsfest gehalten werden, können sie im Betrieb der Vorrichtung nicht verloren gehen bzw. sind keine weiteren Sicherungsmaßnahmen erforderlich, um solches zu verhindern. Da schließlich alternativ, also dort, wo keine Kontaktierungseinrichtung zwischen Druckflächen vorgesehen ist, eine isolierende Struktur vorgesehen ist, kann durch wahlweises Verwenden von Kontaktierungseinrichtung oder isolierender Struktur zwischen den Stromableitern benachbarter Speicherzellen eine beliebige Verschaltung der Speicherzellen innerhalb der Elektroenergie-Speichervorrichtung verwirklicht werden. Da schließlich die Stauchungen zwischen den Druckflächen mit Stützstruktur und zwischen den Druckflächen mit Kontaktierungseinrichtung aneinander angeglichen sind, können die über die Druckflächen auf die Stromableiter ausgeübten Kräfte gleichmäßig aufgenommen und verteilt werden und wird beim Verspannen durch das Spannmittel ein einseitiges Nachgeben der Abstandselemente und ein Verziehen der Gesamtstruktur des Stapels vermieden.

Vorzugsweise weist das Spannmittel eine Mehrzahl, vorzugsweise vier oder sechs, von Zugankern auf, die sich durch Bohrungen in den Stromableitern hindurch erstrecken. Durch eine solche Anordnung wird die Spannkraft dort konzentriert, wo die Klemmkraft wirken soll, nämliche auf den Stromableitern.

Zur Vermeidung von Kurzschlüssen sind vorzugsweise die Zuganker mit einem elektrisch isolierenden Material ummantelt oder mit einer durchgehenden Isolierhülse umgeben.

Vorzugsweise sind die Kontaktierungseinrichtungen als ein oder mehrere Kontaktelemente ausgebildet, die in die Abstandselemente aufgenommen sind. Besonders bevorzugt sind dabei im Bereich einer isolierenden Struktur ein oder mehrere Stützelemente angeordnet, die in dem Abstandselement aufgenommen sind. Hierdurch kann der Materialeinsatz für die besonderen Aufgaben der Kontaktierung und Abstützung minimiert werden und auch das Gesamtgewicht durch Einsparung des üblicherweise schwereren Materials für die Kontaktierung verringert werden. Die Kontaktelemente sind aus einem elektrisch leitenden Material hergestellt, und die Stützelemente sind aus einem elektrisch isolierenden Material, vorzugsweise einem Glas- oder Keramikmaterial, hergestellt.

Besonders bevorzugt ist die Stirnfläche der Stützelemente wenigstens gleich groß, insbesondere größer als die Stirnfläche der Kontaktelemente. So können die Verpresskräfte zuverlässig aufgenommen und Beschädigungen der Abstandselemente vermieden werden.

Vorzugsweise sind die Kontaktierungselemente und die Stützelemente hülsenförmig ausgebildet und sind in entsprechenden Ausnehmungen in den Abstandselementen aufgenommen, wobei die Zuganker durch die hülsenförmigen Kontaktierungs- und Stützelemente hindurch verlaufen. Alternativ sind die Kontaktierungs- und/oder Stützelemente leistenförmig ausgebildet und in entsprechenden Ausnehmungen in den Abstandselementen aufgenommen und sind mit Durchgangslöchern versehen, in welchen die Zuganker verlaufen. In einer weiteren Alternative sind die Abstandselemente vollständig als Stützelement oder als Kontaktierungselement ausgebildet. In allen Fällen wird eine besonders platzsparende Anordnung erreicht, in welcher Kontaktierung und Verspannung durch konzentrische Bauelemente verwirklicht sind. Zusätzlich wir die Spannkraft des Spannmittels auf den Kontaktierungselementen konzentriert und daher ein besonders zuverlässiger elektrischer Kontakt erzielt.

Vorzugsweise ist jedes Abstandselement als ein im Wesentlichen vierseitiger Rahmen ausgebildet derart, dass zwei parallele Rahmenseiten jeweils Druckstege mit stirnseitig gegenüberliegenden Druckflächen aufweisen. So ist jede Zelle in Stapelrichtung zwischen zwei Rahmen angeordnet, und der Abstand der Abstandselemente quer zur Stapelrichtung ist durch die die Druckstege verbindenden Rahmenseiten fest vorgegeben. Daher stabilisiert sich der Stapel aus Zellen und Abstandselementen (d.h., Rahmen) bereits bei Zusammenbau selbst.

Besonders bevorzugt weist in jedem Rahmen einer der Druckstege die Kontaktierungseinrichtung auf und weist der andere der Druckstege die isolierende Struktur auf. So kann irrtumssicher durch wechselseitiges Anordnen der Rahmen und Speicherzellen eine Reihenschaltung verwirklicht werden.

Besonders bevorzugt weist der Stapel zwei leitfähige, vorzugsweise rahmenförmige Druckendstücke auf, die auf dem ersten bzw. letzten Abstandselement in Stapelrichtung aufliegen, über das Spannmittel mit dem Stapel verspannt sind und jeweils über die Kontaktierungseinrichtung in dem ersten bzw. letzten Abstandselement mit einem Stromableiter der ersten bzw. letzten Zelle elektrisch verbunden sind. Auf diese Weise dienen die Endstücke als Pole der Elektroenergie-Speichervorrichtung, an denen die Gesamtspannung abgegriffen werden kann.

Die Erfindung ist besonders vorteilhaft auf Li-Ionen-Akkumulatoren anwendbar.

Die vorstehenden und weitere Merkmale, Aufgaben und Vorteile der vorliegenden Erfindung werden aus der nachstehenden Beschreibung deutlicher ersichtlich werden, die unter Bezugnahme auf die beigefügten Zeichnungen angefertigt wurde.

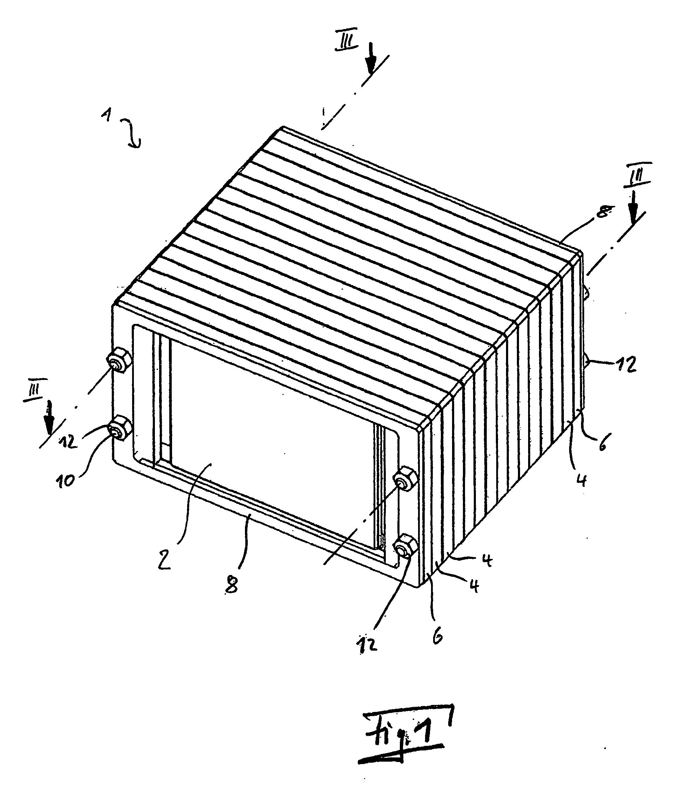

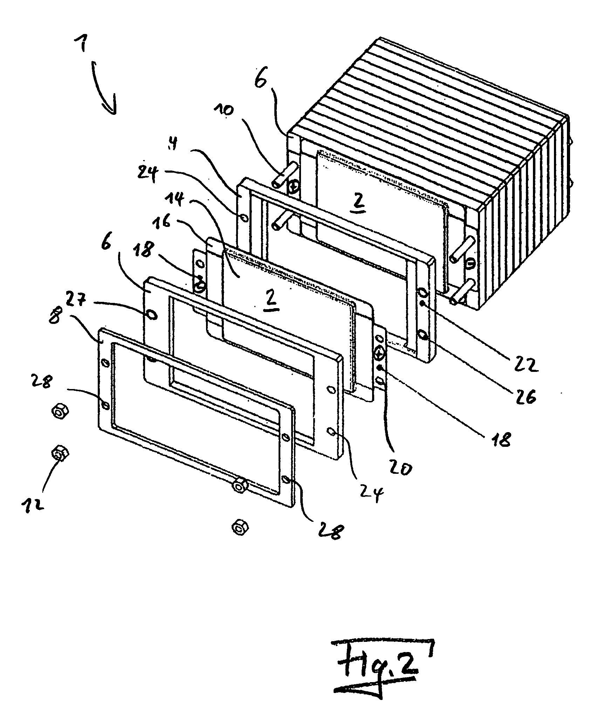

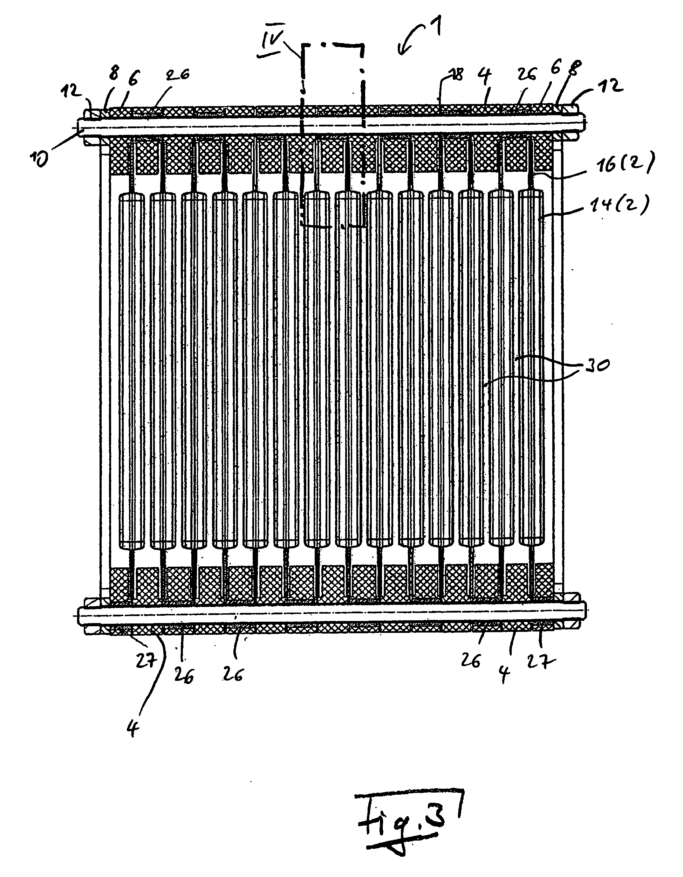

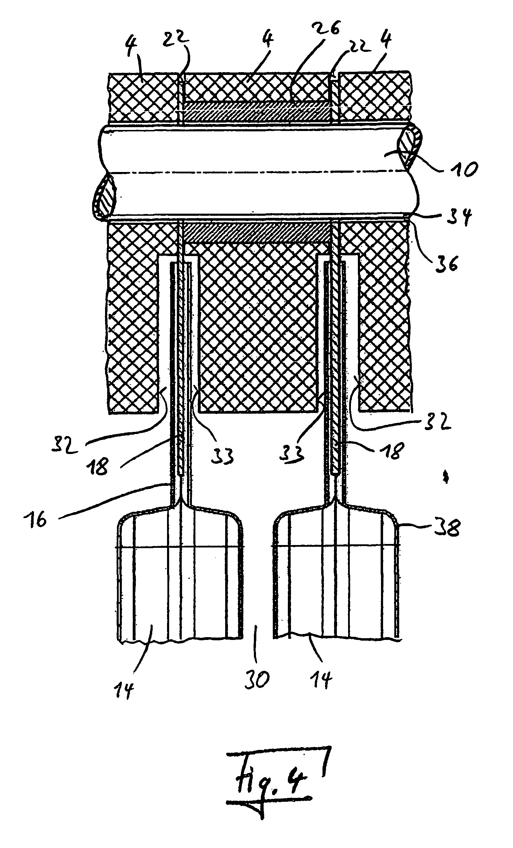

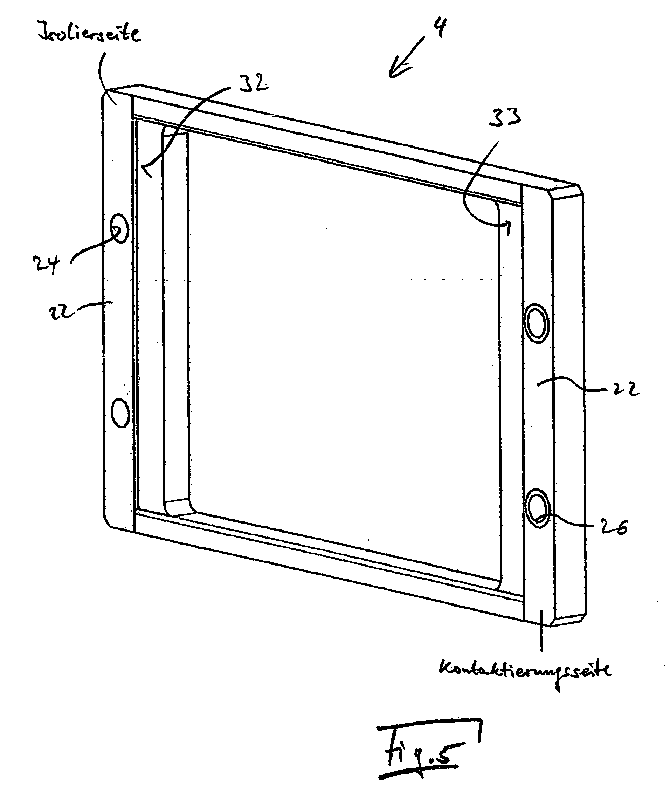

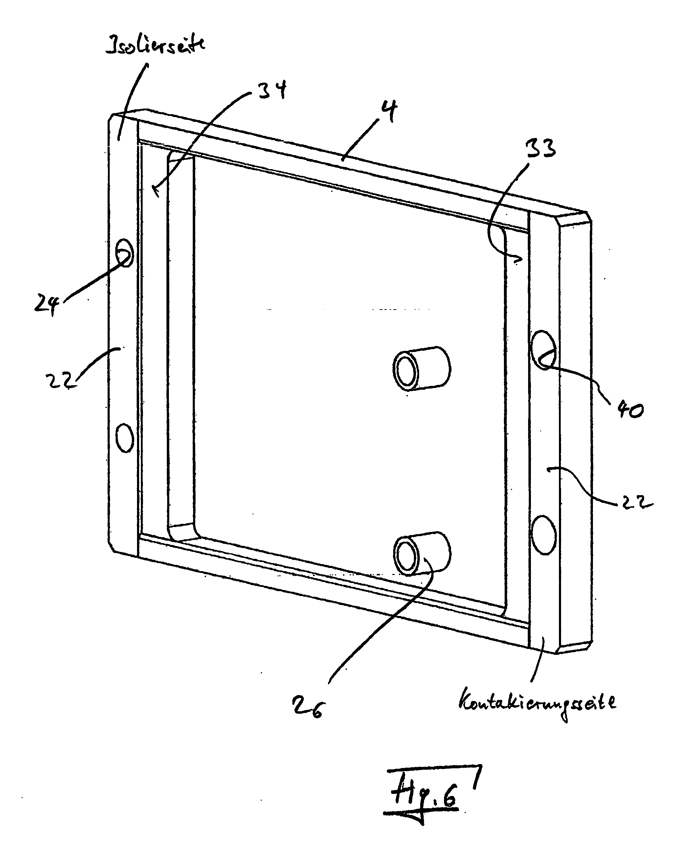

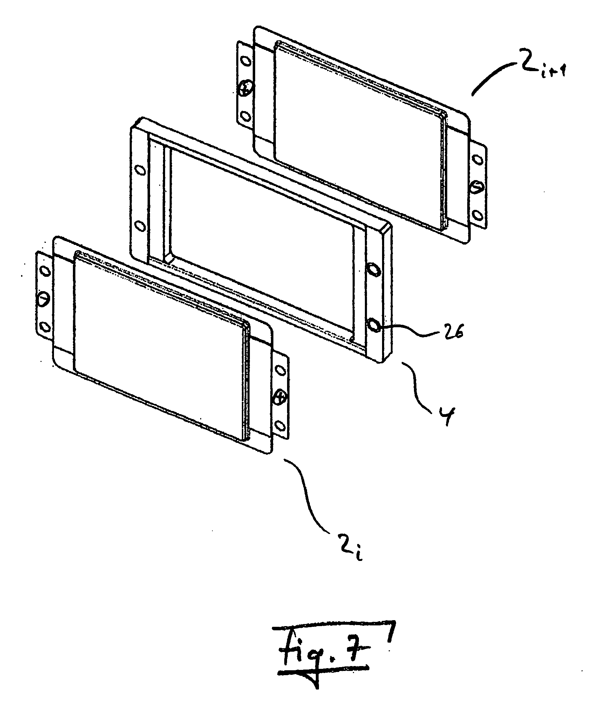

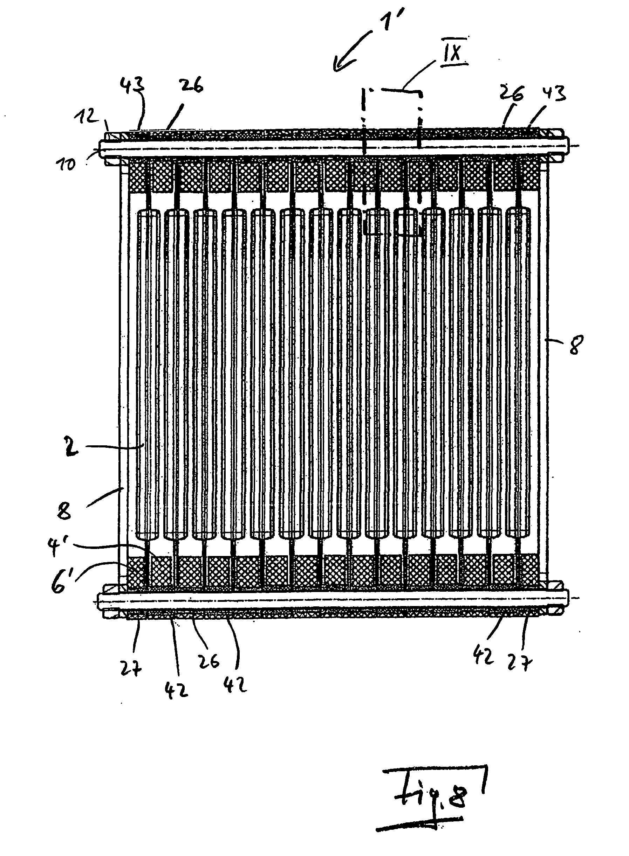

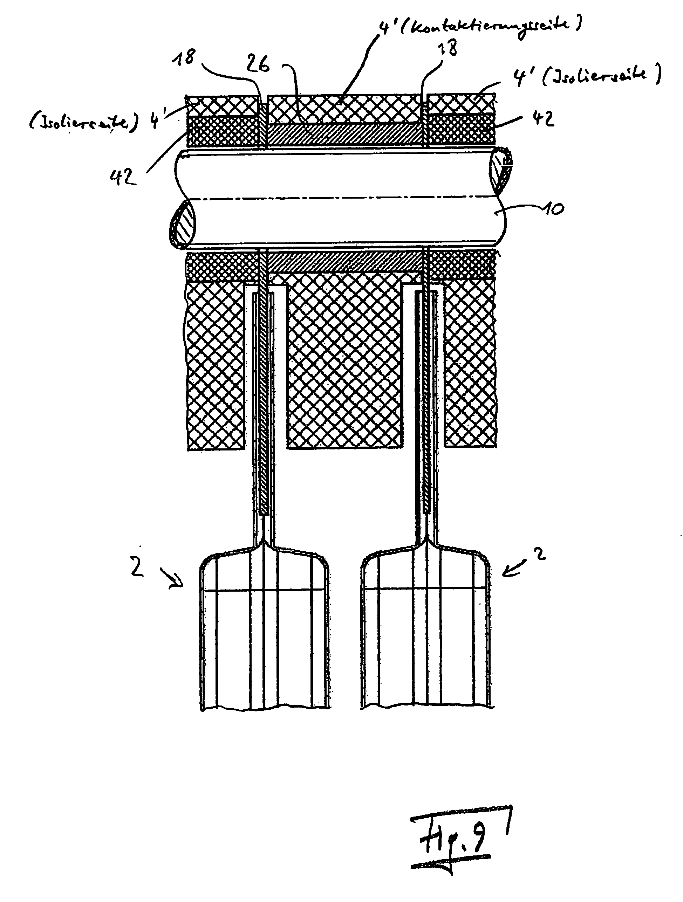

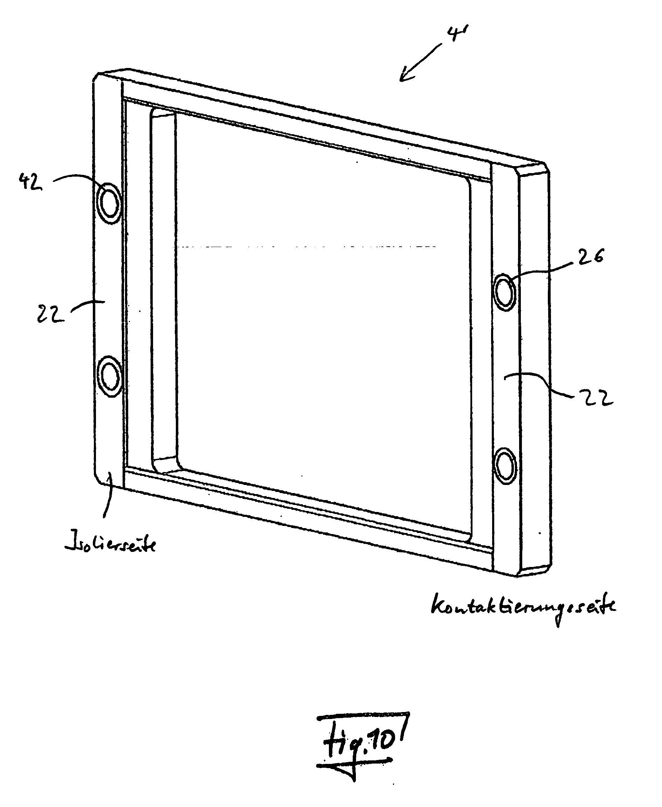

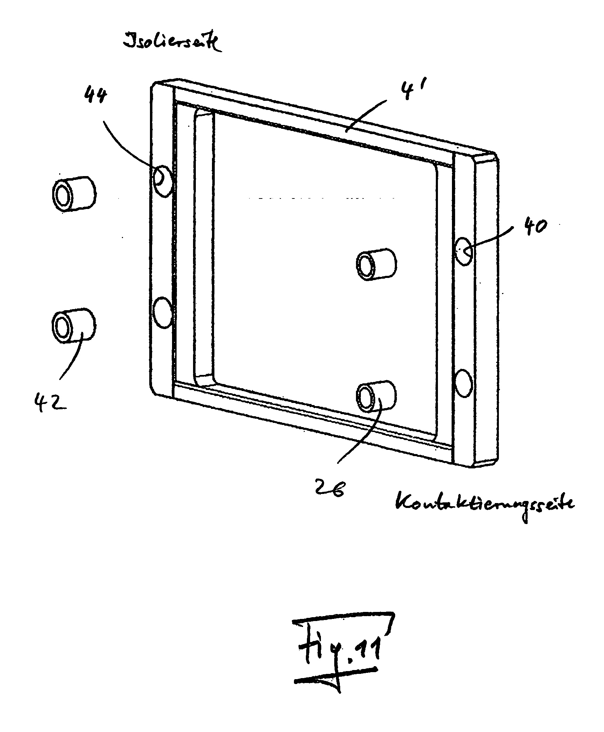

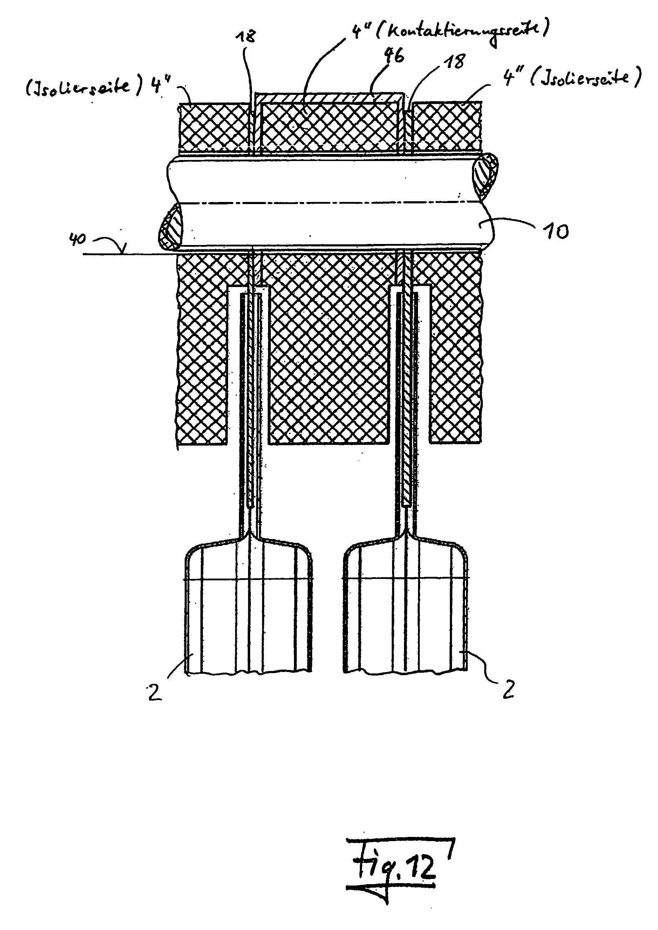

In den Zeichnungen:
- ist Fig. 1: eine perspektivische Darstellung eines Zellblocks eines ersten Ausführungsbeispiels der vorliegenden Erfindung im zusammengebauten Zustand;
- ist Fig. 2: eine perspektivische Explosionsdarstellung des Zellblocks der Fig. 1 in teilweise zusammengebautem Zustand;
- ist Fig. 3: eine Draufsicht des Zellblocks der Fig. 1 im horizontalen Längsschnitt;
- ist Fig. 4: eine vergrößerte Ansicht einer Einzelheit "IV" in Fig. 3;
- zeigt Fig. 5: einen Rahmen des Zellblocks aus Fig. 1 mit integrierten Kontakthülsen;
- zeigt Fig. 6: den Rahmen aus Fig. 5 mit Kontakthülsen in Explosionsdarstellung;
- zeigt Fig. 7: den Rahmen aus Fig. 5 mit zwei benachbarten Pouch-Zellen;
- zeigt Fig. 8: einen Zellblock eines zweiten Ausführungsbeispiels der vorliegenden Erfindung in geschnittener Draufsicht, wobei die Schnittführung derjenigen in Fig. 3 entspricht;
- ist Fig. 9: eine vergrößerte Ansicht einer Einzelheit "IX" in Fig. 8;
- zeigt Fig. 10: einen Rahmen des Zellblocks aus Fig. 8 mit integrierten Kontakt- und Stützhülsen, wobei die Ansicht derjenigen in Fig. 5 entspricht;
- zeigt Fig. 11: den Rahmen aus Fig. 10 mit Kontakt- und Stützhülsen in Explosionsdarstellung; und
- zeigt Fig. 12: einen Kontaktierungsbereich in einem Zellblock eines dritten Ausführungsbeispiels in einer Ansicht entsprechend derjenigen in Fig. 4.

Es ist darauf hinzuweisen, dass die Darstellungen in den Figuren schematisch sind und sich auf die Wiedergabe der für das Verständnis der Erfindung wichtigsten Merkmale beschränken. Auch ist darauf hinzuweisen, dass die in den Figuren wiedergegebenen Abmessungen und Größenverhältnisse allein der Deutlichkeit der Darstellung geschuldet sind und in keiner Weise einschränkend zu verstehen sind.

Ein erstes Ausführungsbeispiel der vorliegenden Erfindung wird nun anhand der Figuren 1 bis 7 beschrieben. Dabei ist Fig. 1 eine perspektivische Darstellung eines Zellblocks 1 eines ersten Ausführungsbeispiels der vorliegenden Erfindung im zusammengebauten Zustand; ist Fig. 2 eine perspektivische Explosionsdarstellung des Zellblocks 1 in teilweise zusammengebautem Zustand; ist Fig. 3 eine Draufsicht des Zellblocks 1 im horizontalen Längsschnitt in einer Ebene "III" in Fig. 1; zeigt Fig. 4 einen Rahmen des Zellblocks 1 mit integrierten Kontakthülsen; zeigt Fig. 5 den Rahmen aus Fig. 4 mit Kontakthülsen in Explosionsdarstellung; ist Fig. 6 eine vergrößerte Ansicht einer Einzelheit "VI" in Fig. 3; und zeigt Fig. 7 den Rahmen aus Fig. 4 mit zwei benachbarten Pouch-Zellen.

Gemäß der perspektivischen Gesamtdarstellung in Fig. 1 weist ein Zellblock 1 eine Mehrzahl von Speicherzellen 2 (galvanischen Zellen, Akkumulatorzellen oder dergleichen, in Fig. 1 nur eine sichtbar), eine Mehrzahl von Zwischenrahmen 4, zwei Endrahmen 6, zwei Druckbrillen 8 sowie vier Zuganker 10 mit beidseitig aufgesetzten Muttern 12 auf. Einer der beiden Endrahmen 4, die Zwischenrahmen 6 und der zweite der beiden Endrahmen 4 bilden einen Stapel, der über die endseitig angeordneten Druckbrillen 8 mittels der Zuganker 10 und den Muttern 12 zusammengehalten werden. Die Speicherzellen 2 befinden sich innerhalb der durch die gestapelten Rahmen 4, 6 gebildeten Struktur, wie nachstehend genauer beschrieben werden wird.

In Fig. 2 ist der Zellblock 1 aus Fig. 1 in einer perspektivischen Teilexplosionsdarstellung gezeigt. D.h., die Muttern 12 sind entfernt, und auf der dem Betrachter zugewandten Seite sind die Druckbrille 8, der Endrahmen 4, eine Speicherzelle 2 und ein Zwischenrahmen 6 von den Zugankern 10 abgezogen.

Gemäß der Darstellung in Fig. 2 sind die Speicherzellen 2 als sog. Flachzellen oder Pouch-Zellen aufgebaut mit gegenüberliegenden, flachen Stromableitern. Genauer gesagt weist jede Speicherzelle 2 einen aktiven Teil 14, eine Siegelnaht (einen Randbereich) 16 und zwei Stromabieiter 18 auf. In dem aktiven Teil 14 finden die elektrochemischen Reaktionen zur Speicherung und Abgabe elektrischer Energie statt. Grundsätzlich kann jede Art elektrochemischer Reaktion zum Aufbau von Speicherzellen verwendet werden; die Beschreibung bezieht sich aber insbesondere auf Li-Ionen-Akkumulatoren, auf welche die Erfindung aufgrund der Anforderungen an mechanische Stabilität und Wärmehaushalt und der wirtschaftlichen-Bedeutung besonders gut anwendbar ist. Der aktive Teil 14 ist von zwei Folien sandwichartig eingefasst, wobei die überstehenden Ränder der Folien miteinander gas- und flüssigkeitsdicht verschweißt sind und die sogenannte Siegelnaht 16 bilden. Von zwei gegenüberliegenden Schmalseiten der Speicherzelle 2 ragt ein positiver bzw. ein negativer Stromableiter (Zellenpol) 18 ab. In den Stromableitern 18 sind jeweils zwei Bohrungen 20 (nachstehend als Polbohrungen bezeichnet) vorhanden.

Die Speicherzellen 2 sind mit den Polbohrungen 20 auf die Zuganker 10 gefädelt, und zwar so, dass jeweils eine Speicherzelle 2 entweder zwischen zwei Zwischenrahmen 4 oder zwischen einem Zwischenrahmen 4 und einem Endrahmen 6 angeordnet ist. Die Rahmen 4, 6 sind so aufgebaut, dass der aktive Teil 14 der Speicherzellen 2 in dem Hohlraum des Rahmens 4, 6 angeordnet ist, während Druckflächen 22 gegen die Flachseiten der Stromableiter 18 drücken und diese nach Anziehen der Zuganker 10 und Muttern 12 festhalten. Die Seiten der Rahmen 4, 6 werden auch als Druckstege bezeichnet.

Die Rahmen 4, 6 weisen ferner in ihren Druckflächen 22 angeordnete Bohrungen 24 und Kontakthülsen 26, 27 auf. Genauer gesagt, sind in den Zwischenrahmen 4 Kontakthülsen 26 angeordnet und sind in den Endrahmen 6 sind Kontakthülsen 27 angeordnet, die sich nur in der Länge voneinander unterscheiden, da die Zwischenrahmen 4 dicker als die Endrahmen 6 sind (s.u.). Dabei sind die Bohrungen 24 auf der einen lateralen Seite eines Rahmens 4, 6 angeordnet, während die Kontakthülsen 26, 27 auf der anderen lateralen Seite des betreffenden Rahmens 4, 6 in größeren Bohrungen angeordnet sind. Die Bohrungen 24 und die Kontakthülsen 26, 27 fluchten mit den Polbohrungen 20 in den Stromableitern 18 der Speicherzellen 2. Somit sind auch die Rahmen 4, 6 mit ihren Bohrungen 24 und Kontakthülsen 26, 27 über die Zuganker 10 gefädelt. Die Kontakthülsen 26 stellen dabei im Fall eines Zwischenrahmens 4 einen elektrischen Kontakt zwischen den Stromableitern 18 der auf beiden Seiten angeordneten Speicherzellen 2 her, während im Fall eines Endrahmens 6 die Kontakthülsen 27 einen elektrischen Kontakt zwischen einem Stromableiter 18 einer Speicherzelle 2 und einer der Druckbrillen 8 herstellen. Auf der anderen lateralen Seite, auf welcher keine Kontakthülsen angeordnet sind, bildet der Rahmen 4, 6 eine elektrische Isolierung zwischen den Stromableitern 18 zweier Speicherzellen 2 bzw. dem Stromableiter 18 und der Druckbrille 8.

Die Rahmen 4, 6 sind im Zellblock 2 so angeordnet, dass sich Bohrungen 24 und Kontakthülsen 26, 27 in der Abfolge der Rahmen 4, 6 abwechseln. Mit anderen Worten, auf jeder lateralen Seite des Zellblocks 1 folgt stets auf einen Drucksteg mit einer Bohrung 24 eine Drucksteg mit einer Kontakthülse 26 oder 27 und umgekehrt. Ferner sind die Speicherzellen 2 in dem Zellblock wechselsinnig angeordnet. D.h., auf einer lateralen Seite folgt stets ein Stromableiter 18 positiver Polarität auf einen Stromableiter 18 negativer Polarität und umgekehrt. Wie oben beschrieben, sind von zwei durch einen Zwischenrahmen 4 voneinander beabstandeten Speicherzellen 2 die Stromableiter 18 auf einer lateralen Seite über Kontakthülsen 26 miteinander verbunden, während die Stromableiter 18 auf der anderen lateralen Seite durch das elektrisch isolierende Material des Zwischenrahmens 4 voneinander elektrisch getrennt sind. Auf diese Weise werden alle Speicherzellen 2 in dem Zellblock 1 "Plus-auf-Minus" miteinander verbunden, d.h., es wird eine Reihenschaltung der Speicherzellen 2 in dem Zellblock 1 verwirklicht. Außerdem wird der nicht mit einer anderen Speicherzelle 2 verbundene Stromableiter 18 der ersten und letzten Speicherzelle 2 in dem Zellblock 1 mit der jeweiligen Druckbrille 8 verbunden, sodass die Druckbrillen 8 einen positiven und einen negativen Pol bilden, an denen die Polspannung des gesamten Zellblocks 1 anliegt.

Die Rahmen 4, 6 sind, wie oben beschrieben, aus einem preiswerten, elektrisch isolierenden Material wie etwa Kunststoff, massiv oder faserverstärkt, hergestellt. Dagegen sind die Kontakthülsen 26, 27 aus einem elektrischen Leiter wie etwa Kupfer oder Messing, Bronze oder einer anderen Kupferlegierung oder einem anderen Metall oder einer anderen Metall-Legierung, mit oder ohne leitungsverbessernde Beschichtung wie etwa aus Silber oder Gold, hergestellt.

Die Kontakthülsen 26, 27 stützen sich auf der Rückseite der Stromableiter 18 gegen das Material der Rahmen 4, 6 ab. Sofern das Material der Rahmen 4, 6 nachgiebiger ist als das Material der Kontakthülsen 26, 27, ist zur Vermeidung ungleicher Stauchung der Rahmen 4, 6 auf beiden lateralen Seiten durch geeignete Maßnahmen dafür zu sorgen, dass die Nachgiebigkeit des Rahmens 4, 6 auf der Seite ohne Kontakthülse (Isolierseite) der Gesamtnachgiebigkeit aus Rahmenmaterial und Hülsenmaterial auf der Seite mit den Kontakthülsen 26, 27 (Kontaktierungsseite) entspricht. Geeignete Maßnahmen, um die Gesamtstauchungen bzw. Steifigkeiten auf beiden lateralen Seiten der Rahmen 4, 6 aneinander anzugleichen, sind:
- erhöhter Faseranteil auf der Isolierseite im Falle eines faserverstärkten Kunststoffs;
- unterschiedliche Material- bzw. Rohstoffzusammensetzung auf Isolier- und Kontaktierungsseite;
- versteifende Einsätze auf der Isolierseite;
- größere Stegbreite, zumindest tragende Stegbreite, auf der Isolierseite.

Diese Maßnahmen können einzeln oder in Kombination durchgeführt werden, um zu dem gewünschten Ergebnis zu gelangen.

In Fig. 3, die eine horizontale Längsschnittansicht des Zellblocks 1 in einer Ebene III in Fig. 1 zeigt, ist die wechselsinnige Anordnung der Kontakthülsen 26 in den Zwischenrahmen 4 und der Kontakthülsen 27 in den Endrahmen 6 leicht zu erkennen. Ebenso ist der Aufbau der Zwischenrahmen 4 und der Endrahmen 6 zu erkennen. Die Rahmen 4, 6 sind so ausgebildet, dass die Druckflächen (22, in der Figur nicht näher bezeichnet) auf die gegenüberliegenden Flachseiten der Stromableiter 18 der Speicherzellen 2 drücken. Sie weisen auch eine Dicke derart auf, dass zwischen den aktiven Teilen 14 der Speicherzellen 2 ein Luftspalt 30 ausgebildet ist. Dieser Luftspalt 30 hält einerseits mechanische Druckbelastungen von den aktiven Teilen 14 fern, sodass hierauf zurückführbare Störungen in der elektrochemischen Funktion vermieden werden. Andererseits ist über den Luftspalt 30 eine Kühlung der Speicherzellen 2 möglich.

Die Endrahmen 6 weisen, wie in Fig. 3 gut zu sehen, eine geringere Dicke als die Zwischenrahmen 4 auf. Damit ist der Tatsache Rechnung getragen, dass nur auf einer Seite der Endrahmen 6 eine Speicherzelle 2 angeordnet ist. Dementsprechend sind die Kontakthülsen 27, die in den Endrahmen 6 angeordnet sind, auch kürzer als die Kontakthülsen 26, die in den Zwischenrahmen 4 angeordnet sind.

Fig. 4 zeigt den Kontaktierungsbereich zwischen zwei Speicherzellen 2 als Einzelheit IV in Fig. 3. Deutlich ist auch der Luftspalt 30 zwischen den aktiven Teilen 14 der Speicherzellen 2 zu erkennen. Durch Freischnitte 32, 33 in den Druckflächen 22 der Zwischenrahmen 4 ist gewährleistet, dass die Druckflächen 22 nur auf die Stromableiter 18, nicht jedoch auf den sonstigen Randbereich der Speicherzellen 2 mit der Siegelnaht 16 Druck ausüben. Die Freischnitte 32 auf der Isolierseite sind tiefer als auf der Kontaktierungsseite. Die Endrahmen 6 weisen im Gegensatz zu den Zwischenrahmen 4 nur auf einer Flachseite Freischnitte 32, 33 auf.

Der Zuganker 10 trägt eine durchgehende Hülse 34 aus einem isolierenden Material, zusätzlich ist zwischen dem Zuganker 10 und den von ihm durchdrungenen Bauteilen ein Abstand 36 vorgesehen. Hierdurch ist der Zuganker 10 gegenüber den leitenden bzw. potentialbehafteten Teilen, also den Stromableitern 18, den Druckbrillen 8 und den Kontakthülsen 26, 27 elektrisch isoliert, und ein Kurzschluss wird wirksam vermieden. Obschon in der Figur nicht näher dargestellt, werden die Rahmen 4, 6, die Druckbrillen 8 und die Speicherzellen 2 so radial zentriert gehalten, dass zwischen den Zugankern 10 und den leitenden bzw. potentialbehafteten Teilen 18, 26, 27, 8 stets der Abstand 36 eingehalten wird; geeignete Mittel zur Zentrierung sind etwa Pass-Stifte oder eine geometrisch entsprechend abgestimmte Formgebung der gestapelten Bauteile. Ebenfalls in den Figuren nicht näher dargestellt, ist auch für eine geeignete Isolierung der Muttern 12 gegenüber den Druckbrillen 8 gesorgt; dies kann etwa durch isolierende Scheiben oder Kragenbuchsen, deren Zylinderteil in die jeweilige Druckbrille 8 ragt, geschehen.

Zum Aufbau der Speicherzellen 2 ist in Fig. 4 zu erkennen, dass die Stromableiter 18 der Plus- und Minusseite unterschiedliche Dicken aufweisen. Auch sind hier die Folien 38 zur Umhüllung der aktiven Teile 14 der Speicherzellen 2 zu sehen.

In Fig. 5 ist ein Zwischenrahmen 4 einzeln in perspektivischer Darstellung mit den Druckflächen 22, den Bohrungen 24 und dem Freischnitt 33 auf der Isolierseite sowie den Kontakthülsen 26 und dem Freischnitt 33 auf der Kontaktierungsseite gezeigt.

Fig. 6 entspricht der Fig. 5 mit dem Unterschied, dass die Kontakthülsen 26 herausgenommen und einzeln dargestellt sind. Dadurch werden die Bohrungen 40 in den Druckflächen 22 der Kontaktierungsseite sichtbar, die zur Aufnahme der Kontakthülsen 26 vorgesehen sind.

Fig. 7 zeigt noch einmal zur Verdeutlichung die Abfolge einer Speicherzelle 2ᵢ mit einem Minuspol auf der linken Zeichnungsseite und einem Pluspol auf der rechten Zeichnungsseite, eines Zwischenrahmens 4 mit den Kontakthülsen 26, und einer Speicherzelle 2ᵢ₊₁ mit einem Minuspol auf der rechten Zeichnungsseite und einem Pluspol auf der linken Zeichnungsseite. Der Pluspol der Speicherzelle 2ᵢ wird über die Kontakthülsen 26 mit dem Minuspol der Speicherzelle 2ᵢ₊₁ verbunden.

Nun wird ein zweites Ausführungsbeispiel der vorliegenden Erfindung anhand der Figuren 8 bis 11 beschrieben. Dabei ist Fig. 8 eine Draufsicht eines Zellblocks 1' dieser Ausführungsform der Fig. 1 im horizontalen Längsschnitt entsprechend Fig. 3; ist Fig. 9 eine vergrößerte Ansicht einer Einzelheit "IX" in Fig. 8; zeigt Fig. 10 einen Rahmen des Zellblocks aus Fig. 1 mit integrierten Kontakt- und Stützhülsen; und zeigt Fig. 11 den Rahmen aus Fig. 10 mit den Kontakt- und Stützhülsen in Explosionsdarstellung.

Der Zellblock 1' in diesem Ausführungsbeispiel entspricht im Wesentlichen dem Zellblock 1 in dem ersten Ausführungsbeispiel, und die vorstehenden Erläuterungen dazu sind auf dieses Ausführungsbeispiel anwendbar, sofern dies nicht im Widerspruch zu den nachstehend erläuterten Unterschieden steht. Die Unterschiede betreffen im Wesentlichen die Zwischenrahmen 4' und Endrahmen 6', die von den Zwischenrahmen 4 und den Endrahmen 6 in dem ersten Ausführungsbeispiel geringfügig abweichen.

Im Unterschied zu dem Zellblock 1 in dem ersten Ausführungsbeispiel weisen die Zwischenrahmen 4' in diesem Ausführungsbeispiel zusätzlich zu den auf der Kontaktierungsseite angeordneten Kontakthülsen 26 Stützhülsen 42 auf, die auf der Isolierseite angeordnet sind. Die Endrahmen 6' in diesem Ausführungsbeispiel weisen entsprechend zusätzliche, auf der Isolierseite angeordnete Stützhülsen 43 zusätzlich zu den Kontakthülsen 27 auf. Die Stützhülsen 42, 43 sind aus einem Material gefertigt, das eine den Kontakthülsen 26, 27 entsprechende Nachgiebigkeit bzw. Festigkeit aufweist. Daher können sich die Kontakthülsen 26, 27, die an den Stromableitern 18 der Speicherzellen 2 anliegen, wirksam an den auf der Rückseite der Stromableiter 18 anliegenden Stützhülsen abstützen. Eine einseitige Stauchung der Rahmen 4', 6' wird daher ebenso vermieden wie ein Einsinken der Kontakthülsen 26, 27 und eine hierdurch hervorgerufene Verformung der Stromableiter 18.

Die Konfiguration der elektrischen Verbindung der Stromableiter 18 zweier Speicherzellen 2 über eine Kontakthülse 26 mit Stützhülsen 42 als Gegenlager ist in Fig. 9 als Einzelheit IX in Fig. 8 vergrößert dargestellt. In der Figur ist deutlich sichtbar, dass die Stützhülsen 42 einen größeren Außendurchmesser als die Kontakthülsen 26 aufweisen, um eine besonders wirksame Stützwirkung zu entfalten. Die Stützhülsen 26 sind aus einem harten, elektrisch isolierenden Material wie etwa einem Glas- oder Keramikwerkstoff oder einem harten, ggf. faserverstärkten Kunststoff hergestellt. Die vorstehenden Ausführungen gelten entsprechend für die Stützhülsen 43, die in den Endrahmen 6' angeordnet sind.

In Fig. 10 ist ein einzelner Zwischenrahmen 4' in perspektivischer Darstellung mit den Druckflächen 22, den Stützhülsen 42 auf der Isolierseite sowie den Kontakthülsen 26 auf der Kontaktierungsseite gezeigt.

Fig. 11 entspricht der Fig. 10 mit dem Unterschied, dass die Kontakthülsen 26 und die Stützhülsen 42 herausgenommen und einzeln dargestellt sind. Dadurch werden die Bohrungen 40 in den Druckflächen 22 der Kontaktierungsseite und die Bohrungen 44 in den Druckflächen 22 der Isolierseite sichtbar, die zur Aufnahme der Kontaktierungshülsen 42 bzw. der Stützhülsen 42 vorgesehen sind.

Fig. 12 zeigt einen Kontaktierungsbereich zwischen den Stromableitern 18 zweier benachbarter Speicherzellen 2 in einem Zellblock eines dritten Ausführungsbeispiels. Der Zeichnungsausschnitt entspricht dem der Fig. 3.

Der Zellblock in diesem Ausführungsbeispiel entspricht im Wesentlichen dem Zellblock 1 in dem ersten Ausführungsbeispiel, und die vorstehenden Erläuterungen dazu sind auf dieses Ausführungsbeispiel anwendbar, sofern dies nicht im Widerspruch zu den nachstehend erläuterten Unterschieden steht. Die Unterschiede betreffen im Wesentlichen die Zwischenrahmen 4" und Endrahmen (in der Figur nicht näher dargestellt), die von den Zwischenrahmen 4 und den Endrahmen 6 in dem ersten Ausführungsbeispiel geringfügig abweichen.

Gemäß der Darstellung in Fig. 12 ist auf der Kontatierungsseite des Zwischenrahmens 4" eine Kontaktfeder 46 vorgesehen, die einen Kontakt zwischen den Stromableitern 18 zweier benachbarter Speicherzellen 2 herstellt. Die Kontaktfeder 46 ist aus einem guten Leitermaterial (s.o.) hergestellt und weist ein U-förmiges Profil auf. Die Kontaktfeder 46 ist von außen auf die Druckfläche (22, in der Figur nicht näher bezeichnet) des Zwischenrahmens 4" aufgesteckt. Der Zwischenrahmen 4" weist auf der Kontaktierungsseite eine geringere Dicke als auf der Isolierseite, und die Innenweite des U-Profils der Kontaktfeder 46 entspricht der Dicke des Zwischenrahmens 4" an dieser Stelle. Die Außenweite des U-Profils der Kontaktfeder 46 entspricht der Dicke des Zwischenrahmens 4" auf der Isolierseite. Die Kontaktfeder 46 weist in ihren abstehenden Schenkeln Bohrungen auf, die mit den Bohrungen 40 in den Druckflächen 22 des Zwischenrahmens 4" fluchten und den gleichen Durchmesser aufweisen. Im Unterschied zu den Zwischenrahmen 4 im ersten Ausführungsbeispiel weisen die Zwischenrahmen 4" im vorliegenden Ausführungsbeispiel sowohl auf der Isolierseite als auch auf der Kontaktierungsseite die Bohrungen 40 mit gleichem Durchmesser auf, da auf der Kontaktierungsseite keine Kontakthülsen vorgesehen sind.

Die vorstehenden Erläuterungen gelten ebenso für die Endrahmen, die für dieses Ausführungsbeispiel nicht näher dargestellt sind. Dort sind Kontaktfedern mit geringerer Weite entsprechend der geringeren Dicke des Endrahmens zu verwenden.

Die Kontaktfedern 46 stellen der durch die Zuganker aufgebrachten Druck keinen nennenswerten Widerstand entgegen, sodass keine unsymmetrischen Stauchungen auf der Kontaktierungs- und der Isolierseite entstehen. Die Kontaktfedern 46 erstrecken sich über die gesamte Höhe des Druckstegs der Rahmen auf der Kontaktierungsseite, sodass auch eine Einkerbung der Druckfläche 22 nicht zu erwarten ist.

In einer nicht näher dargestellten Abwandlung des dritten Ausführungsbeispiels ist die Breite des Zwischenrahmens 4" auf der Kontaktierungsseite um wenigstens die Stärke der Kontaktfeder 4" verringert und weisen die abstehenden Schenkel der Kontaktfeder eine entsprechend geringere Höhe auf. Somit stehen keine stromführenden oder potentialbehafteten Teile an der Seite des Zellblocks hervor.

In einer weiteren Abwandlung sind die Kontaktfedern 46 auf der seitlich freiliegenden fläche mit einem isolierenden Überzug versehen oder ist dort eine isolierende Abdeckung vorgesehen.

Obschon die vorliegende Erfindung vorstehend unter Bezugnahme auf konkrete Ausführungsbeispiele in ihren wesentlichen Merkmalen beschrieben wurde, versteht sich, dass die Erfindung nicht auf diese Ausführungsbeispiele beschränkt ist, sondern in dem durch die Patentansprüche vorgegebenen Umfang und Bereich abgewandelt werden kann.

In einer Abwandlung werden anstelle der vorstehend beschriebenen End- und Zwischenrahmen riegelförmige Abstandselemente (Abstands- oder Montageriegel) verwendet, die jeweils einer Isolierseite oder einer Kontaktierungsseite der oben beschriebenen Rahmen entsprechen. Die Abstandsriegel weisen Bohrungen und Hülsen wie oben beschrieben auf und werden wie die Rahmen auf einer lateralen Seite des Zellblocks im Wechsel mit den Stromableitern der Speicherzellen auf die Zuganker gefädelt. Da die Zuganker durch die Druckbrillen in ihrer radialen Lage festgelegt sind, bildet sich nach Verspannung über die Druckbrillen ein starrer und stabiler Block, der aufgrund des geringeren Materialeinsatzes leichter als ein Zellblock mit Rahmen ist. Gegebenenfalls werden die Druckbrillen dicker als bei den vorstehend beschriebenen Ausführungsbeispielen sein oder Versteifungen aufweisen. Anstelle von Hülsen oder Kontaktfedern können die Abstandsriegel vollständig wahlweise aus einem Leitermaterial oder aus einem elektrisch isolierenden Material bestehen, wobei als Material für die isolierenden Abstandsriegel ein solches gewählt wird, das eine dem Leitermaterial angeglichene Drucknachgiebigkeit aufweist.

In einer weitergehenden Abwandlung sind Abstandsriegel wie oben beschrieben in entsprechenden Aussparungen der Rahmen4, 6 gehalten.

In einer weiteren Abwandlung werden auf jeder Seite drei oder mehr Zuganker verwendet.

In einer letzten Abwandlung wird anstelle von Zugankern ein Spannband zum Verspannen des Zellblocks verwendet.

### Liste der Bezugszeichen:

| | |
|---|---|
| 1, 1' | Zellblock |
| 2 | Speicherzelle |
| 4, 4', 4" | Zwischenrahmen |
| 6, 6' | Endrahmen |
| 8 | Druckbrille |
| 10 | Zuganker |
| 12 | Mutter |
| 14 | aktiver Teil von 2 |
| 16 | Siegelnaht von 2 |
| 18 | Stromableiter von 2 (+ und -) |
| 20 | Polbohrung in 18 |
| 22 | Druckfläche von 4, 4', 6, 6' |
| 24 | Bohrung in 22 |
| 26, 27 | Kontakthülse |
| 28 | Bohrung in 8 |
| 30 | Luftspalt |
| 32, 33 | Freischnitt in 22 |
| 34 | Beschichtung oder Hülse von 10 |
| 36 | Abstand |
| 38 | Hüllfolie von 2 |
| 40 | Bohrung in 22 |
| 42, 43 | Stützhülse |
| 44 | Bohrung in 22 |
| 46 | Kontaktfeder |

Es wird ausdrücklich darauf hingewiesen, dass vorstehende Bezugszeichenliste integraler Bestandteil der Beschreibung ist.

## Patentansprüche

1. Elektroenergie-Speichervorrichtung (1), aufweisend: eine Mehrzahl von flachen Speicherzellen (2) zur Speicherung und Abgabe elektrischer Energie mit gegenüberliegenden, flachen Stromableitern (18), eine Mehrzahl von Abstandselementen (4, 4', 4", 6, 6') zum Einhalten eines vorbestimmten Abstands zwischen den Speicherzellen (2), und ein Spannmittel (10) zum Verspannen der Zellen (2) zu einem Stapel, wobei die Abstandselemente (4, 4', 4", 6, 6') Druckflächen aufweisen, wobei die Stromableiter (18) der Zellen (2) jeweils zwischen den Druckflächen (22) zweier Abstandselemente (4, 4', 4", 6, 6') mittels Kraftschluss durch das Spannmittel (10) eingespannt sind, wobei im Bereich gegenüberliegender Druckflächen (22) eines Abstandselements (4, 4', 4", 6, 6') entweder eine Kontaktierungseinrichtung zum Herstellen einer elektrischen Verbindung zwischen den gegenüberliegenden Druckflächen (22) oder eine isolierende Struktur vorgesehen ist, **dadurch gekennzeichnet dass** die Abstandselemente (4, 4', 4", 6, 6') so ausgelegt sind, dass die Stauchungen zwischen den Druckflächen (22) mit isolierender Struktur und zwischen den Druckflächen (22) mit Kontaktierungseinrichtung aneinander angeglichen sind.

2. Elektroenergie-Speichervorrichtung (1) nach Anspruch 1, **dadurch gekennzeichnet, dass** das Spannmittel eine Mehrzahl, vorzugsweise vier oder sechs, von Zugankern (10) aufweist, die sich durch Bohrungen (20) in den Stromableitern (18) hindurch erstrecken.

3. Elektroenergie-Speichervorrichtung (1) nach Anspruch 2, **dadurch gekennzeichnet, dass** die Zuganker (10) mit einem elektrisch isolierenden Material ummantelt oder mit einer durchgehenden Isolierhülse umgeben sind.

4. Elektroenergie-Speichervorrichtung (1) nach einem der vorstehenden Ansprüche, **dadurch gekennzeichnet, dass** die Kontaktierungseinrichtungen als ein oder mehrere Kontaktelemente (26) ausgebildet sind, die in die Abstandselemente (4, 4', 4", 6, 6') aufgenommen sind, wobei die Kontaktelemente (26) aus einem Leitermaterial hergestellt sind.

5. Elektroenergie-Speichervorrichtung (1) nach Anspruch 4, **dadurch gekennzeichnet, dass** im Bereich einer isolierenden Struktur ein oder mehrere Stützelemente (42) angeordnet sind, die in dem Abstandselement (4, 4', 4", 6, 6') aufgenommen sind, wobei das oder die Stützelemente (42) aus einem elektrisch isolierenden Material, vorzugsweise einem Glas- oder Keramikmaterial, hergestellt ist.

6. Elektroenergie-Speichervorrichtung (1) nach Anspruch 5, **dadurch gekennzeichnet, dass** die Stirnfläche der Stützelemente (42) wenigstens gleich groß, insbesondere größer als die Stirnfläche der Kontaktelemente (26) ist.

7. Elektroenergie-Speichervorrichtung (1) nach Anspruch 5 oder 6, **dadurch gekennzeichnet, dass** die Kontaktierungselemente (26) und die Stützelemente (42) hülsenförmig ausgebildet und in entsprechenden Ausnehmungen in den Abstandselementen (4, 4', 4", 6, 6') aufgenommen sind, wobei die Zuganker (10) durch die hülsenförmigen Kontaktierungs- (26) und Stützelemente (42) hindurch verlaufen.

8. Elektroenergie-Speichervorrichtung (1) nach Anspruch 5 oder 6, **dadurch gekennzeichnet, dass** die Kontaktierungs- und/oder Stützelemente leistenförmig ausgebildet und in entsprechenden Ausnehmungen in den Abstandselementen (4, 4', 4", 6, 6') aufgenommen und sind mit Durchgangslöchern versehen sind, in welchen die Zuganker (10) verlaufen.

9. Elektroenergie-Speichervorrichtung (1) nach Anspruch 5 oder 6, **dadurch gekennzeichnet, dass** die Abstandselemente (4, 4', 4", 6, 6') vollständig als Stützelement oder als Kontaktierungselement ausgebildet sind.

10. Elektroenergie-Speichervorrichtung (1) nach einem der vorstehenden Ansprüche, **dadurch gekennzeichnet, dass** jedes Abstandselement (4, 4', 4", 6, 6') als ein im Wesentlichen vierseitiger Rahmen ausgebildet ist derart, dass zwei parallele Rahmenseiten jeweils Druckstege mit stirnseitig gegenüberliegenden Druckflächen (22) aufweisen.

11. Elektroenergie-Speichervorrichtung (1) nach Anspruch 10, **dadurch gekennzeichnet, dass** in jedem Rahmen (4, 4', 4", 6, 6') einer der Druckstege die Kontaktierungseinrichtung aufweist und der andere der Druckstege die isolierende Struktur aufweist.

12. Elektroenergie-Speichervorrichtung (1) nach einem der Ansprüche 4 bis 11, **dadurch gekennzeichnet, dass** der Stapel zwei leitfähige, vorzugsweise rahmenförmige Druckendstücke aufweist, die auf dem ersten bzw. letzten Abstandselemente (4, 4', 4", 6, 6') in Stapelrichtung aufliegen, über das Spannmittel mit dem Stapel verspannt sind und jeweils über die Kontaktierungseinrichtung in dem ersten bzw. letzten Abstandselement mit einem Stromableiter der ersten bzw. letzten Zelle elektrisch verbunden sind.

13. Elektroenergie-Speichervorrichtung (1) nach einem der vorstehenden Ansprüche, **dadurch gekennzeichnet, dass** die Speicherzellen (2) Akkumulatoren sind, in denen eine elektrochemische Reaktion, insbesondere unter Beteiligung von Li-Ionen, stattfindet.

## Claims

1. An electrical energy storage apparatus (1) comprising: a plurality of flat storage cells (2) for storing and discharging electrical energy having opposing flat current conductors (18), a plurality of spacer elements (4, 4', 4", 6, 6') for maintaining a predetermined spacing between the storage cells (2), and tensioning means (10) for bracing the cells (2) into a stack, wherein the spacer elements (4, 4', 4", 6, 6') comprise pressure surfaces, wherein the tensioning means (10) braces the respective current conductors (18) of the cells (2) between the pressure surfaces (22) of two spacer elements (4, 4', 4", 6, 6') by force-type connection, wherein either a contacting device for establishing an electrical connection between opposing pressure surfaces (22) or an insulating structure is provided in the area of opposing pressure surfaces (22) of a spacer element (4, 4', 4", 6, 6'), **characterized in that** the spacer elements (4, 4', 4", 6, 6') are designed such that the compression existing between the pressure surfaces (22) having an insulating structure and between the pressure surfaces (22) having a contacting device are adapted to one another.

2. The electrical energy storage apparatus (1) according to claim 1, **characterized in that** the tensioning means comprises a plurality of anchor rods (10), preferably four or six, which extend through bores (20) in the current conductors (18).

3. The electrical energy storage apparatus (1) according to claim 2, **characterized in that** the anchor rods (10) are encased by an electrically insulating material or are surrounded by a continuous insulating sleeve.

4. The electrical energy storage apparatus (1) according to any one of the preceding claims, **characterized in that** the contacting devices are designed as one or more contact elements (26) accommodated in the spacer elements (4, 4', 4", 6, 6'), wherein the contact elements (26) are made of a conductive material.

5. The electrical energy storage apparatus (1) according to claim 4, **characterized in that** one or more support elements (42) accommodated in the spacer element (4, 4', 4", 6, 6') are arranged in the area of an insulating structure, wherein the support element(s) (42) is/are made from an electrically insulating material, preferably a glass or ceramic material.

6. The electrical energy storage apparatus (1) according to claim 5, **characterized in that** the frontal area of the support elements (42) is at least equal in size, in particular larger than the frontal area of the contact elements (26).

7. The electrical energy storage apparatus (1) according to claim 5 or 6, **characterized in that** the contact elements (26) and the support elements (42) are of sleeve-shaped configuration and are accommodated in corresponding recesses in the spacer elements (4, 4', 4", 6, 6'), wherein the anchor rods (10) extend through the sleeve-shaped contact elements (26) and support elements (42).

8. The electrical energy storage apparatus (1) according to claim 5 or 6, **characterized in that** the contact elements and/or support elements are of rod-shaped configuration, are accommodated in corresponding recesses in the spacer elements (4, 4', 4", 6, 6') and are provided with through holes through which the anchor rods (10) pass.

9. The electrical energy storage apparatus (1) according to claim 5 or 6, **characterized in that** the spacer elements (4, 4', 4", 6, 6') are wholly configured as support elements or as contact elements.

10. The electrical energy storage apparatus (1) according to any one of the preceding claims, **characterized in that** each spacer element (4, 4', 4", 6, 6') is designed as a substantially quadrilateral frame such that each of two parallel sides of the frame comprise pressure bars having frontally opposing pressure areas (22).

11. The electrical energy storage apparatus (1) according to claim 10, **characterized in that** one of the pressure bars comprises the contacting device and the other of the pressure bars comprises the insulating structure in each frame (4, 4', 4", 6, 6').

12. The electrical energy storage apparatus (1) according to any one of claims 4 to 11, **characterized in that** the stack comprises two conductive, preferably frame-shaped pressure end pieces, which rest on the first or respectively the last spacer element (4, 4', 4", 6, 6') in the stack direction, are braced to the stack by means of the tensioning means and are each electrically connected to a current conductor of the first or respectively last cell by means of the contacting device.

13. The electrical energy storage apparatus (1) according to any one of the preceding claims, **characterized in that** the storage cells (2) are accumulators in which an electrochemical reaction occurs, particularly one involving Li-ions.

## Revendications

1. Dispositif accumulateur d'énergie électrique (1) comprenant: une pluralité d'éléments accumulateurs plats (2) destinés à stocker et à fournir de l'énergie électrique, présentant des conducteurs plats opposés (18), une pluralité d'éléments d'écartement (4, 4', 4", 6, 6') destinés à maintenir un écart prédéterminé entre les éléments accumulateurs (2) et un moyen de serrage (10) destiné à serrer les éléments (2) pour former un empilement, les éléments d'écartement (4, 4', 4", 6, 6') présentant des surfaces de pression, les conducteurs (18) des éléments accumulateurs (2) étant serrés à force par le moyen de serrage (10) entre les surfaces de pression (22) de deux éléments d'écartement (4, 4', 4", 6, 6'), soit un dispositif de mise en contact destiné à établir une connexion électrique entre les surfaces de pression opposées (22), soit une structure isolante étant disposée au niveau des surfaces de pression opposées (22) d'un élément d'écartement (4, 4', 4", 6, 6'), **caractérisé en ce que** les éléments d'écartement (4, 4', 4", 6, 6') sont conçus pour que les écrasements entre les surfaces de pression (22) à structure isolante et entre les surfaces de pression (22) à dispositif de mise en contact soient harmonisés.

2. Dispositif accumulateur d'énergie électrique (1) selon la revendication 1, **caractérisé en ce que** le moyen de serrage comprend une pluralité de tirants d'ancrage (10), de préférence quatre ou six, s'étendant à travers des trous (20) dans les conducteurs (18).

3. Dispositif accumulateur d'énergie électrique (1) selon la revendication 2, **caractérisé en ce que** les tirants d'ancrage (10) sont enveloppés d'un matériau électriquement isolant ou entourés d'un manchon isolant continu.

4. Dispositif accumulateur d'énergie électrique (1) selon l'une quelconque des revendications précédentes, **caractérisé en ce que** les dispositifs de mise en contact sont conçus comme un ou plusieurs éléments de contact (26) logés dans les éléments d'écartement (4, 4', 4", 6, 6'), les éléments de contact (26) étant composés d'un matériau conducteur.

5. Dispositif accumulateur d'énergie (1) selon la revendication 4, **caractérisé en ce qu'**un ou plusieurs éléments d'appui (42) logés dans l'élément d'écartement (4, 4', 4", 6, 6') sont disposés dans la zone d'une structure isolante, le ou les éléments d'appui (42) étant composés d'un matériau électriquement isolant, de préférence d'un matériau en verre ou en céramique.

6. Dispositif accumulateur d'énergie (1) selon la revendication 5, **caractérisé en ce que** la surface frontale des éléments d'appui (42) est au moins aussi grande, en particulier plus grande que la surface frontale des éléments de contact (26).

7. Dispositif accumulateur d'énergie (1) selon la revendication 5 ou 6, **caractérisé en ce que** les éléments de mise en contact (26) et les éléments d'appui (42) sont conçus en forme de manchon et logés dans des évidements correspondants dans les éléments d'écartement (4, 4', 4", 6, 6'), les tirants d'ancrage (10) s'étendant à travers les éléments de mise en contact (26) et les éléments d'appui (42) en forme de manchon.

8. Dispositif accumulateur d'énergie (1) selon la revendication 5 ou 6, **caractérisé en ce que** les éléments de mise en contact et/ou d'appui sont conçus en forme de baguette, sont logés dans des évidements correspondants dans les éléments d'écartement (4, 4', 4", 6, 6') et sont pourvus de trous débouchants dans lesquels s'étendent les tirants d'ancrage (10).

9. Dispositif accumulateur d'énergie (1) selon la revendication 5 ou 6, **caractérisé en ce que** les éléments d'écartement (4, 4', 4", 6, 6') sont conçus entièrement comme un élément d'appui ou comme un élément de mise en contact.

10. Dispositif accumulateur d'énergie (1) selon l'une quelconque des revendications précédentes, **caractérisé en ce que** chaque élément d'écartement (4, 4', 4", 6, 6') est conçu comme un cadre sensiblement à quatre côtés, de telle sorte que deux côtés parallèles du cadre comprennent respectivement des ponts de pression dotés de surfaces de pression (22) opposées côté frontal.

11. Dispositif accumulateur d'énergie (1) selon la revendication 10, **caractérisé en ce que** dans chaque cadre (4, 4', 4", 6, 6'), un des ponts de pression comprend le dispositif de mise en contact et l'autre pont de pression comprend la structure isolante.

12. Dispositif accumulateur d'énergie (1) selon l'une quelconque des revendications 4 à 11, **caractérisé en ce que** l'empilement comprend deux embouts de pression conducteurs, de préférence en forme de cadre, reposant sur le premier ou le dernier élément d'écartement (4, 4', 4", 6, 6') dans le sens de l'empilement, serrés avec l'empilement par le moyen de serrage et connectés électriquement respectivement par le dispositif de mise en contact dans le premier ou le dernier élément d'écartement à un conducteur du premier ou second élément.

13. Dispositif accumulateur d'énergie (1) selon l'une quelconque des revendications précédentes, **caractérisé en ce que** les éléments d'accumulateur (2) sont des accumulateurs dans lesquels se situe une réaction électrochimique, en particulier avec la participation d'ions Li.
